(19) Europäisches Patentamt
European Patent Office
Office européen des brevets

(11) **EP 3 692 258 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(21) Anmeldenummer: **18782693.8**

(22) Anmeldetag: **01.10.2018**

(51) Int Cl.:
***F03D 17/00*** *(2016.01)*

(86) Internationale Anmeldenummer:
**PCT/EP2018/076580**

(87) Internationale Veröffentlichungsnummer:
**WO 2019/068606 (11.04.2019 Gazette 2019/15)**

(54) **VERFAHREN ZUR KALIBRIERUNG EINES DRUCKSENSORS AN EINER WINDENERGIEANLAGE SOWIE WINDENERGIEANLAGE MIT EINER EINRICHTUNG ZUR KALIBRIERUNG EINES DRUCKSENSORS**

METHOD FOR CALIBRATING A PRESSURE SENSOR ON A WIND TURBINE PLANT AND WIND TURBINE PLANT HAVING AN APPARATUS FOR CALIBRATING A PRESSURE SENSOR

PROCÉDÉ D'ÉTALONNAGE D'UN CAPTEUR DE PRESSION D'UNE ÉOLIENNE ET ÉOLIENNE COMPORTANT UN DISPOSITIF D'ÉTALONNAGE D'UN CAPTEUR DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2017 DE 102017123077**

(43) Veröffentlichungstag der Anmeldung:
**12.08.2020 Patentblatt 2020/33**

(73) Patentinhaber: **Wobben Properties GmbH**
**26607 Aurich (DE)**

(72) Erfinder:
• **SCHEIT, Christoph**
**26605 Aurich (DE)**
• **ALTMIKUS, Andree**
**26605 Aurich (DE)**
• **FRAUENLOB, Marwin**
**47533 Kleve (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
**EP-A1- 1 733 241    US-A1- 2017 191 464**

**Beschreibung**

Die Erfindung betrifft ein Verfahren zur Kalibrierung eines Drucksensors, der an einem Rotorblatt einer Windenergieanlage angeordnet ist sowie eine Windenergieanlage mit einer Einrichtung zur Kalibrierung eines solchen Drucksensors.

Gemäß dem Stand der Technik sind Windenergieanlagen Winden mit unterschiedlichen Eigenschaften ausgesetzt, die aus unterschiedlichen Richtungen und mit unterschiedlicher Stärke insbesondere auf die Rotorblätter der Windenergieanlage treffen. Bei diesen unterschiedlichen Windbedingungen wandelt die Windenergieanlage dem Wind entnommene kinetische Energie in elektrische Energie um und speist diese in ein Versorgungsnetz ein. Bei der Wandlung der Windenergie in elektrische Energie wird die Windenergieanlage in Abhängigkeit der Windbedingungen und einer vorbestimmten einzuspeisenden elektrischen Leistung in verschiedenen Betriebspunkten betrieben, wobei jeder Betriebspunkt insbesondere durch einen Blatteinstellwinkel und ein einzustellendes Generatormoment bestimmt wird.

Der Betriebspunkt wird hierbei so eingestellt, dass ein möglichst effizienter Betrieb unter Berücksichtigung einer langen Lebensdauer und vermehrt auch unter Einhaltung geringer Betriebsgeräusche erzielt wird. Effizient bedeutet insbesondere eine möglichst hohe Energie aus dem zur Verfügung stehenden Wind zu generieren. Betriebsgeräusche, die beispielsweise durch Turbulenzen an den Rotorblättern entstehen sind hierbei insbesondere dann zu minimieren, wenn die Windenergieanlage im Bereich von Wohngebieten aufgestellt ist, so dass die Anwohner nicht von den Geräuschen der Rotorblätter der Windenergieanlage gestört werden.

Demnach berücksichtigen die Steuerungseinrichtungen und/oder Regeleinrichtungen einer Windenergieanlage das vorbestimmte Verhalten der jeweils an der Windenergieanlage installierten Rotorblätter zur Einstellung der Betriebspunkte der Windenergieanlage.

Beispielsweise aus der WO 2015/185720 A1 ist eine Windenergieanlage mit optischen Drucksensoren bekannt, die den Druck an der Oberfläche der Windenergieanlage messen, um einen möglichst effizienten Betrieb im eingangs erwähnten Sinne der Windenergieanlage zu ermöglichen.

DE 10 2014 117 914 A1 beschreibt ein Verfahren zur Erfassung einer Torsionsinstabilität eines Rotorblatts einer Windkraftanlage. Das Verfahren beinhaltet ein Messen einer Beschleunigung mit einem faseroptischen Beschleunigungssensor, wobei der Beschleunigungssensor an einer radialen Position im Bereich der äußeren 70% des Radius des Rotorblatts zur Verfügung gestellt ist und ein Auswerten der Beschleunigung zur Erzeugung eines Signals zur Erfassung einer Torsionsinstabilität, insbesondere Flattern, und/oder eines Signals zur Erfassung einer Torsions-Biege-Kopplung.

US 2014/0186176 A1 stellt ein Verfahren zum Bestimmen eines Grades eines Gierwinkelfehlers einer Windkraftanlage bereit. Das Verfahren umfasst das Erhalten von Winddruckmesswerten vor der Rotorebene, die bezogen auf eine Drehung eines Spinners der Windkraftanlage periodisch sind, das Durchführen eines Signalverarbeitungsschritts, um die Winddruckmesswerte zu verarbeiten, das Bestimmen eines Phasenversatzes der Winddruckmesswerte relativ zu einer Winkelreferenz und das Ableiten eines Gierwinkelfehlers aus dem Phasenversatz. Ferner werden ein Verfahren zum Herstellen einer Beziehung zwischen einem Phasenversatz von Winddruckmesswerten und einen Grad des Gierfehlers einer Windturbine, eine Gierfehlerbestimmungseinheit und eine Windturbine ebenfalls beschrieben.

Ein weiteres Dokument aus dem Stand der Technik ist EP 1 733 241 A1.

Auf der einen Seite haben optische Drucksensoren den Vorteil, dass sie unempfindlich gegen elektrostatische Aufladung und/oder Blitzentladungen sind und deshalb für einen Dauereinsatz in Rotorblättern von Windenergieanlagen besonders geeignet sind, weil in Rotorblätter relativ häufig ein Blitz einschlägt. Auf der anderen Seite unterliegen absolute und relative Empfindlichkeit von optischen Drucksensoren einer zeitlichen Drift, was allerdings auch für andere Arten von Sensoren zutrifft. Ersteres bedeutet, dass sich der Signalpegel eines Ausgangssignals eines optischen Drucksensors, das von einem bestimmten Druck erzeugt wird, im Laufe der Zeit verschiebt. Letzteres bedeutet, dass sich die relative Änderung des Signalpegels des Ausgangssignals des Drucksensors bei einer bestimmten Druckänderung ebenfalls verändert, das heißt der Signalpegel des Ausgangssignals wird im Laufe der Zeit größer oder kleiner. Die beschriebene Drift der Messwerte ist für jeden Drucksensor individuell verschieden, was bei Windenergieanlagen besonders nachteilig ist, weil die Sensoren bei Windenergieanlagen über einen sehr langen Zeitraum und bei stark unterschiedlichen Umgebungsbedingungen arbeiten. Dabei können Windenergieanlagen mit einer Vielzahl, beispielsweise 100 oder mehr, von Drucksensoren ausgestattet sein.

Für den Einsatz in Windenergieanlagen geeignete faseroptische Drucksensoren sind beispielsweise von der Firma fos4X GmbH kommerziell erhältlich.

Die Ausgangssignale der Drucksensoren werden von der Steuerung der Windenergieanlage erfasst, um den Betriebspunkt der Windenergieanlage einzustellen. Es liegt auf der Hand, dass eine zeitliche Drift der Messwerte von den Drucksensoren zu einer ungewollten Verschiebung des Betriebspunktes weg von einem optimalen Betriebspunkt führt.

Hiervon ausgehend ist es eine Aufgabe der Erfindung, wenigstens eines der genannten Probleme zu beheben oder zumindest zu verbessern.

Die vorliegende Erfindung löst diese Aufgabe durch ein Verfahren zur Kalibrierung eines Drucksensors im regulären Betrieb der Windenergieanlage sowie durch eine Windenergieanlage, die mit einer Einrichtung zur Kalibrierung eines Drucksensors ausgerüstet ist.

Nach einem ersten Aspekt schlägt die vorliegende Erfindung ein Verfahren zur Kalibrierung eines Drucksensors vor, der an einem Rotorblatt einer Windenergieanlage angeordnet ist, das an einem Rotor der Windenergieanlage befestigt ist. Das Verfahren zur Kalibrierung umfasst

- Ermitteln von Messwerten des Drucksensors in wenigstens zwei Drehstellungen des Rotors, in denen sich der Drucksensor in unterschiedlichen Höhen befindet;
- Vergleichen eines auf Nabenhöhe ermittelten Druckes mit einem Referenzdruck;
- im Falle einer Abweichung des ermittelten Drucks auf Nabenhöhe von dem Referenzdruck, die größer als ein erster vorgegebener Toleranzbereich ist, Verschieben einer Kennlinie des Drucksensors, bis der ermittelte Druck auf Nabenhöhe innerhalb des vorgegebenen Toleranzbereiches mit dem Referenzdruck übereinstimmt;
- Feststellen des Unterschieds der Messwerte des Drucksensors in den wenigstens zwei Drehstellungen des Rotors;
- im Falle einer Abweichung des Unterschieds der festgestellten Messwerte des Drucksensors von einem ursprünglichen Unterschied, die größer als ein zweiter vorgegebener Toleranzbereich ist, Korrigieren der Kennlinie derart, dass der festgestellte Unterschied innerhalb des vorgegebenen Toleranzbereiches wieder mit dem ursprünglichen Unterschied übereinstimmt.

Das erfindungsgemäße Verfahren gestattet es, eine absolute und relative Drift von einem Drucksensor, der an einem Rotorblatt einer Windenergieanlage angebracht sind, zu kompensieren, wodurch im Ergebnis eine bessere und/oder effizientere Steuerung und/oder Regelung der Windenergieanlage erreichbar ist. Bei dem Drucksensor handelt es sich insbesondere um einen optischen Drucksensor, beispielsweise um einen faseroptischen Drucksensor. Der eine Drucksensor ist im Zusammenhang mit der vorliegenden Erfindung beispielhaft für alle Drucksensoren gemeint, die auf einem Rotorblatt oder mehreren Rotorblättern der Windenergieanlage angeordnet sind.

In einer vorteilhaften Weiterbildung wird der auf Nabenhöhe ermittelte Druck aus den Messwerten des Drucksensors bestimmt, insbesondere aus einem Mittelwert der Messwerte in den beiden Drehstellungen, oder der auf Nabenhöhe ermittelte Druck entspricht den Messwerten des Drucksensors, wenn sich das Rotorblatt, auf dem der Sensor angeordnet ist, in der 9-Uhr- bzw. 3-Uhr-Stellung befindet.

Bei einem zweckmäßigen Ausführungsbeispiel umfasst es das Korrigieren der Kennlinie, eine Steigung einer linearen Kennlinie zu verändern. Bei linearen Kennlinien sind die zur Kompensation einer Drift notwendigen Korrekturen besonders einfach vorzunehmen. Grundsätzlich ist das vorgeschlagene Verfahren aber nicht zur Anwendung auf Drucksensoren mit einer linearen Kennlinie beschränkt.

Gemäß einer besonders vorteilhaften Ausführungsform des Verfahrens werden die Messwerte des Drucksensors während eines Trudelbetriebs der Windenergieanlage ermittelt. Ein Vorteil hierbei ist, dass im Trudelbetrieb die aerodynamisch bedingte Druckänderung so gering ist, dass das Messergebnis nur im Bereich einer bestimmten Toleranz verfälscht werden kann. Darüber hinaus geht die Windenergieanlage ohnehin regelmäßig in den Trudelbetrieb über, so dass genügend Zeit für die Kalibrierung aller Drucksensoren zur Verfügung steht, ohne dass die Energieproduktion der Windenergieanlage dadurch beeinträchtigt wird.

In einer Weiterbildung des Verfahrens werden die Messwerte des Drucksensors ermittelt, wenn das Rotorblatt mit dem Drucksensor eine 12-Uhr-Stellung bzw. eine 6-Uhr-Stellung einnimmt. In den genannten Rotorblattstellungen wird während eines Umlaufs des Rotors der höchste bzw. niedrigste Druck gemessen, was sich grundsätzlich vorteilhaft auf die Genauigkeit der Kalibrierung auswirkt.

Es ist zweckmäßig, wenn die Messwerte des Drucksensors in mehr als zwei Drehstellungen des Rotors ermittelt werden. Auf diese Weise können mehr Messpunkte bereitgestellt werden, was in der Regel die Genauigkeit der Kalibrierung günstig beeinflusst.

Gemäß einer konkreten Ausführungsform werden die Messwerte des Drucksensors mit einer Messrate von wenigstens 10 Hz ermittelt. Grundsätzlich wird angestrebt, dass mindestens 20 Messwerte pro Umdrehung zur Verfügung stehen, um für vier Positionen pro Umdrehung jeweils fünf Messwerte für eine Mittelung zur Verfügung zu haben, was bei typischen Rotordrehzahlen mit einer Messrate von 10 Hz erreicht wird. Bei anderen Ausführungsbeispielen können viel höhere Messraten zur Anwendung kommen, zum Beispiel 5000 Hz. Bei einer Drehzahl des Rotors der Windenergieanlage von 10 bis 15 Umdrehungen pro Minute werden in diesem Fall 20000 bis 30000 Messungen pro Umdrehungen pro Sensor ausgeführt. Die Vielzahl von Messpunkten eröffnet unter anderem die Möglichkeit, sogenannte "Ausreißer" in den Messdaten zu identifizieren und zu entfernen oder zu korrigieren. Auch diese Maßnahme trägt zur Genauigkeit der Kalibrierung bei. Die hohe Anzahl der Messwerte wird durch Filterung bzw. Mittelung reduziert, um einen Ausgangswert zu erzeugen, der weiterverarbeitet wird. Während die Messwerte erfasst werden, dreht sich der Rotor weiter. Die Messwerte, die bei einer bestimmten Blattposition zugeordnet sind, werden durch Mittelung über einen bestimmten Drehbereich des Rotors bestimmt. Der Drehbereich ist symmetrisch um eine Zielposition eines bestimmten Rotorblattes aufgespannt. Eine Zielposition ist zum Beispiel eine Drehstellung, wenn sich das Rotorblatt in der 12-Uhr-Position befindet.

Mit Vorteil kann es auch vorgesehen sein, von mehreren Drucksensoren, die auf jeweils einem Rotorblatt in demselben Abstand von einer Drehachse des Rotors angeordnet sind, Messwerte zu ermitteln, wenn der jeweilige Drucksensor eine vorbestimmte Stelle auf einer Umlaufbahn um die Drehachse des Rotors erreicht, und die Messwerte aller Sensoren zu mitteln. Diese Maßnahme verhindert, dass singuläre Ereignisse, die einzelne Messwerte verfälschen, die Kalibrierung beeinträchtigen. In einer konkreten Ausführungsform kann die Mittelung eine Tiefpassfilterung sein. Aus dem Mittelwert wird ein Ausgangswert erzeugt, der weiterverarbeitet wird, zum Beispiel in einer Einrichtung zur Regelung der Windenergieanlage.

In einer vorteilhaften Weiterbildung wird bei der Kalibrierung des Drucksensors zusätzlich die Lufttemperatur und/oder Luftfeuchtigkeit in unterschiedlichen Höhen festgestellt, was die Genauigkeit der Kalibrierung erhöhten kann, weil die Lufttemperatur bzw. die Luftfeuchtigkeit ebenfalls einen Einfluss auf die Höhe des statischen Luftdrucks hat.

Weiterhin wird ein Verfahren zur Kalibrierung eines Drucksensors vorgeschlagen, der an einem Rotorblatt einer Windenergieanlage angeordnet ist, das an einem Rotor der Windenergieanlage befestigt ist. Messwerte des Drucksensors werden zur Steuerung und/oder Regelung der Windenergieanlage verwendet. Das Verfahren zeichnet sich durch das Ermitteln von Messwerten des Drucksensors in wenigstens zwei Drehstellungen des Rotors aus, in denen sich der Drucksensor in unterschiedlichen Höhen befindet, und dadurch, dass zum Kalibrieren ein betriebsbedingter Trudelzustand ausgenutzt wird.

Hier kommt wiederum der Vorteil zum Tragen, dass im Trudelbetrieb der dynamische Druckanteil sehr klein ist, und das Messergebnis nur gering im Rahmen einer gegebenen Toleranz verfälscht werden kann. Darüber hinaus geht die Windenergieanlage ohnehin regelmäßig in den Trudelbetrieb über, so dass genügend Zeit für die Kalibrierung aller Drucksensoren zur Verfügung steht, ohne dass die Energieproduktion der Windenergieanlage dadurch beeinträchtigt wird.

Nach einem zweiten Aspekt der Erfindung wird eine Windenergieanlage mit einem Rotor vorgeschlagen, an dem wenigstens ein Rotorblatt befestigt ist, welches einen Drucksensor trägt, und mit einem Drehsensor, der die Drehstellung des Rotors ermittelt, sowie mit einer Messeinrichtung, welche dazu eingerichtet ist, die Messwerte des Drucksensors und des Drehsensors auszulesen und eine Kennlinie des Drucksensors, insbesondere nach einem Verfahren gemäß einem der vorstehenden Ansprüche, zu kalibrieren. Die Windenergieanlage ist folglich dazu geeignet, um ein Verfahren nach dem ersten Aspekt der Erfindung auszuführen, so dass eine bessere und/oder effizientere Steuerung und/oder Regelung der Windenergieanlage erreichbar ist.

Bei einer Ausführungsform hat der Drucksensor im Messbereich von atmosphärischen Drücken eine lineare Kennlinie. Der Drucksensor kann ein optischer Drucksensor, insbesondere ein faseroptischer Drucksensor, sein.

In einer vorteilhaften Weiterbildung weist die Messeinrichtung der Windenergieanlage einen weiteren Drucksensor auf, der auf Nabenhöhe, insbesondere an einer Gondel der Windenergieanlage, angeordnet ist. Der weitere Drucksensor zeichnet sich insbesondere durch eine sehr geringe absolute Drift aus, jedenfalls durch eine deutlich geringere absolute Drift als der zu kalibrierende Drucksensor. Der weitere Drucksensor ist insbesondere dazu geeignet, um eine absolute Drift des optischen Drucksensors zu ermitteln.

In einer vorteilhaften Weiterbildung weist die Messeinrichtung der Windenergieanlage zusätzlich zu dem zweiten Drucksensor in der Gondel mindestens einen weiteren Drucksensor mit gleichen Eigenschaften am Turm auf. Durch diese zusätzliche(n) Messungen des Umgebungsdruckes kann nun auch zusätzlich die relative Sensitivität des im Rotorblatt befindlichen Drucksensors korrigiert werden.

In einer dazu alternativen Ausführungsform weist die Messeinrichtung eine Empfangseinrichtung auf, die allgemeine Wetterdaten empfängt, insbesondere meteorologische Luftdruckdaten. Meteorologische Luftdruckdaten sind für zahlreiche Standorte in guter Genauigkeit verfügbar und können mit der barometrischen Höhenformel auf den Luftdruck auf Nabenhöhe umgerechnet werden. Ein weiterer Drucksensor an der Gondel ist in diesem Falle entbehrlich.

Mit Vorteil ist ein Turm der Windenergieanlage mit in unterschiedlichen Höhen angeordneten Temperatursensoren und/oder Feuchtigkeitssensoren ausgerüstet. Dadurch ist es möglich, die Temperatur und/oder die Feuchtigkeit von Luftschichten in unterschiedlichen Höhen zu erfassen. Diese Daten können zu einer verbesserten Genauigkeit der Kalibrierung des Drucksensors beitragen.

In einer vorteilhaften Ausführungsform ist/sind auf dem wenigstens einen Rotorblatt der Windenergieanlage ein Temperatursensor und/oder ein Feuchtigkeitssensor angeordnet. Ein solcher Temperatursensor und/oder ein Feuchtigkeitssensor kann auch die Temperatur bzw. Feuchtigkeit von Luftschichten ermitteln, die sich oberhalb des Turmes der Windenergieanlage befinden. Die Temperatur bzw. Feuchtigkeit der Luftschichten in unterschiedlichen Höhen ist von Interesse, weil die Lufttemperatur bzw. Luftfeuchtigkeit ebenfalls einen Einfluss auf die Höhe des statischen Luftdrucks hat. Die Kenntnis der Lufttemperatur bzw. Luftfeuchtigkeit kann sich günstig auf die Genauigkeit der Kalibrierung des Drucksensors auswirken. Selbstverständlich können auch mehrere bzw. alle Rotorblätter der Windenergieanlage mit Temperatursensoren und/oder Feuchtigkeitssen-sor ausgerüstet sein.

In einer vorteilhaften Weiterbildung ist die Messeinrichtung dazu eingerichtet ist, das Verfahren zur Kalibrierung während eines betriebsbedingten Trudelns durchzuführen. Damit ist der Vorteil verbunden, dass die Kalibrierung ein Betriebszustand ausgenutzt wird, der hierfür besonders geeignet ist, weil im Trudelbetrieb der dynamische Druck generell gering ist und an den Rotorblättern kein oder zumindest nur ein geringfügiger Staudruck auftritt. Außerdem geht die Windenergieanlage betriebsbedingt ohnehin immer wieder in den Trudelbetrieb, so dass durch den Kalibriervorgang keine Ertragseinbußen der Windenergieanlage zu befürchten sind.

Weitere Vorteile und Ausführungsbeispiele der Erfindung werden nachstehend unter Bezugnahme auf die Zeichnungen näher erläutert.

Fig. 1     zeigt eine schematische Ansicht einer Windenergieanlage gemäß einem Ausführungsbeispiel,

Fig. 2     eine Ansicht auf die Saugseite eines die schematisch dargestellten Rotor-blat-tes gemäß einem Ausführungsbeispiel,

Fig. 3     eine schematische Ansicht eines Blattquerschnitts eines Rotorblattes gemäß einem Ausführungsbeispiel,

Fig. 4     eine schematische Darstellung einer Bahnkurve eines Drucksensors, der auf einem rotierenden Rotorblatt angeordnet ist,

Fig. 5A     eine Kennlinie eines optischen Drucksensors im Messbereich von atmosphärischen Drücken;

Fig. 5B     eine Messkurve eines Ausgangssignals eines Drucksensors, der auf einem rotierenden Rotorblatt angeordnet ist,

Fig. 6     die Kennlinie des Drucksensors aus Fig. 5A mit und ohne absolute Drift;

Fig. 7     die Kennlinie des Drucksensors aus Fig. 5A mit und ohne relative Drift; und

Fig. 8     ein Flussdiagramm, das ein Verfahren zur Kalibrierung eines optischen Drucksensors veranschaulicht.

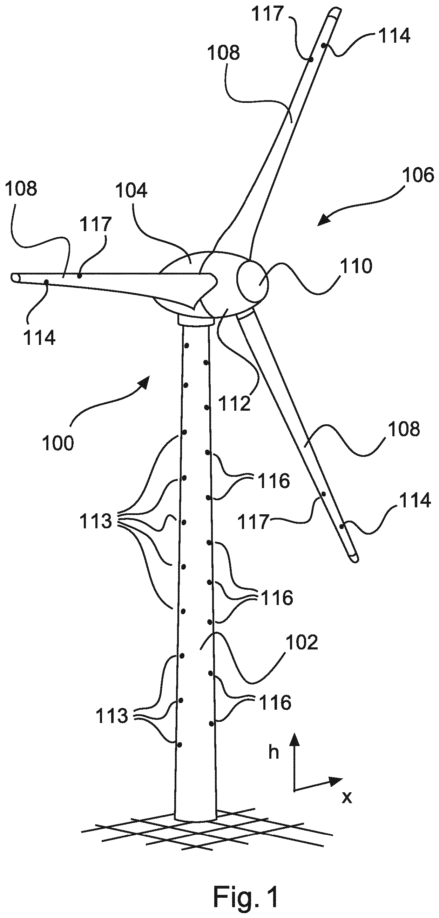

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Ferner weist der Rotor 106 eine Rotornabe 112 auf, an der die Rotorblätter 108 befestigt sind. Der Blattwinkel, also der Drehwinkel ist um eine Verstellachse des Rotorblatts, die sich entlang der Längsrichtung des Rotorblattes erstreckt und im Wesentlichen senkrecht auf einer Drehachse des Rotors steht, einstellbar.

Der Rotor 106 mit den Rotorblättern 108, dem Spinner 110 und der Rotornabe 112 wird auch als drehender Teil und die Gondel 104 mit dem Turm 102 als feststehender Teil der Windenergieanlage 100 bezeichnet. Der Rotor 106 wird im Betrieb durch den Wind in eine Drehbewegung versetzt und treibt dadurch einen Generator (nicht dargestellt) in der Gondel 104 an. An dem Turm 102 sind auf unterschiedlichen Höhen außerdem Temperatursensoren 113 angeordnet. Bei einem Ausführungsbeispiel sind auf jeder Höhe mehrere Temperatursensoren 113 an unterschiedlichen Umfangspositionen angeordnet, um zum Beispiel den Einfluss von Sonneneinstrahlung auf das Ergebnis der Temperaturmessung zu begrenzen. Zusätzlich oder alternativ dazu sind Temperatursensoren 114 auf einem oder mehreren der Rotorblätter 108 der Windenergieanlage angeordnet. Die Temperatursensoren 113 und 114 dienen dazu, die Lufttemperatur von Luftschichten auf unterschiedlichen Höhen zu messen. Bei einem Ausführungsbeispiel sind zusätzlich Luftfeuchtigkeitssensoren am Turm und/oder an den Rotorblättern 116 bzw. 117 vorgesehen, um die Luftfeuchtigkeit in unterschiedlichen Höhen zu messen. Die Temperatursensoren 113, 114 können zum Beispiel auch mit den Luftfeuchtigkeitssensoren 116, 117 kombiniert sein.

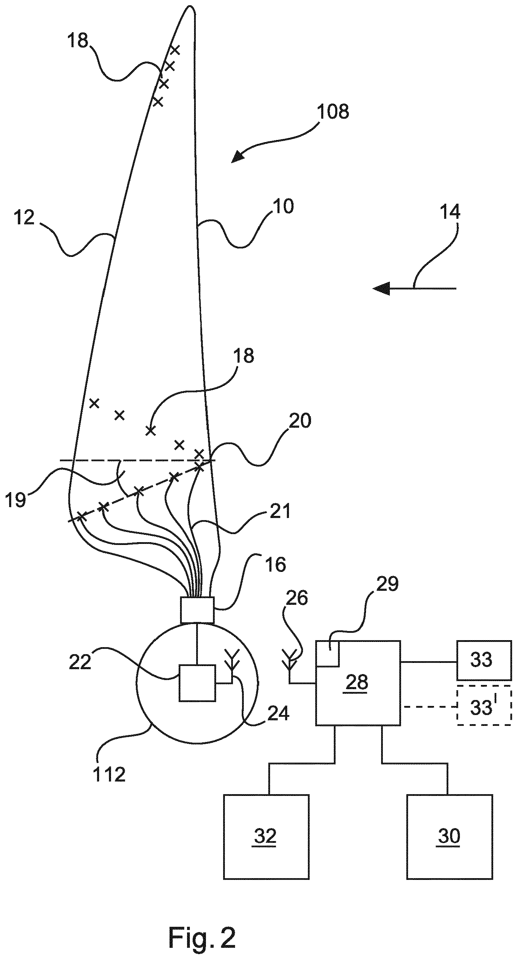

Fig. 2 zeigt eine Draufsicht auf die Saugseite eines Rotorblattes 108. Das Rotorblatt 108 weist eine Blattnasenkante 10, die auch kurz Blattnase oder Blattvorderkante genannt wird, sowie eine Blatthinterkante 12 auf. Das Rotorblatt 108 wird entsprechend der Windrichtung derart ausgerichtet, dass der Wind von der Blattnasenkante 10 in Richtung Blatthinterkante 12, also in Anströmrichtung 14, die der Pfeilrichtung 14 entspricht, entlang der Blattoberfläche streicht. Ferner ist ein Blattadapter 16 dargestellt, mit dem das Rotorblatt 108 an der Rotornabe 112 befestigt ist.

Ferner sind schematisch optische Drucksensoren 18 durch Kreuze dargestellt, die in Anströmrichtung 14 hintereinander und beispielsweise mit einem Versatzwinkel 19 versetzt angeordnet sind.

Von den Drucksensoren 18 führen Lichtwellenleiter 21, die auch Glasfaserleitungen genannt werden, durch den Blattadapter 16 in die Rotornabe 112 und sind dort mit einem Konverter 22 verbunden, der die optischen Signale der optischen Drucksensoren in elektrische Signale umwandelt und/oder vor und/oder nach der Wandlung verstärkt. Der Konverter 22 ist mit einer Sendeeinrichtung 24 verbunden, die die elektrischen Signale, die aus den optischen Signalen erhalten werden, in Funksignale wandelt und an eine Empfangseinrichtung 26 überträgt.

Die Empfangseinrichtung 26 befindet sich im stehenden Teil, z.B. in der Gondel 104 der Windenergieanlage 100. Die Empfangseinrichtung 26 wandelt die von der Sendeeinrichtung 24 empfangenen Signale wieder in elektrische Signale um. Ferner ist die Empfangseinrichtung 26 mit einer Signalverarbeitungseinrichtung 28 verbunden, um an diese die umgewandelten Signale der optischen Drucksensoren 18 zu übertragen. Die Signalverarbeitungseinrichtung 28 ist mit einem Drehsensor 29 ausgerüstet, der die Drehstellung des Rotors ermittelt.

In der Signalverarbeitungseinrichtung 28 werden die empfangenen Signale, Informationen oder Werte bzw. Druckwerte der optischen Sensoren 18 verarbeitet und/oder daraus z.B. ein Anströmmodell des Rotorblattes 108 ermittelt bzw. erzeugt. Das Anströmmodell oder zumindest extrahierte, einzelne Werte oder Wertebereiche oder zeitliche Verläufe des Anströmmodells werden dann einer Blattwinkelregelung 30 und/oder einer Generatormomentregelung 32 zugeführt. In Abhängigkeit des Anströmmodells wird in der Blattwinkelregelung 30 der Sollwert der Regelung des zu regelnden Blattwinkels und/oder in der Generatormomentregelung 32 wird unter Berücksichtigung des Anströmmodells der Sollwert des zu regelnden Generatormoments angepasst. Darüber hinaus ist die Signalverarbeitungseinrichtung 28 mit einem Drucksensor 33 verbunden, der den Luftdruck auf Nabenhöhe misst und einen Referenzdruckwert pref abgibt.

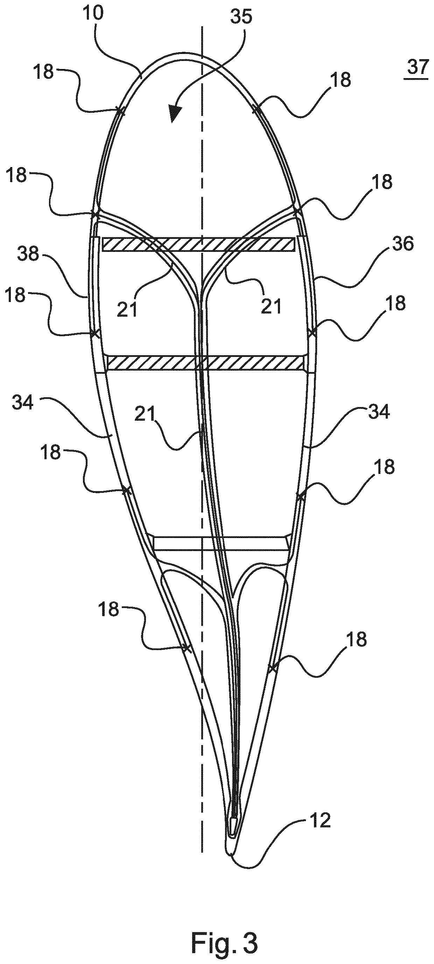

Fig. 3 zeigt beispielhaft einen Blattschnitt, wobei an der Blattwand 34 umlaufend auf der Saugseite 36 und der Druckseite 38 Drucksensoren 18 angeordnet sind. Die Blattwand 34 trennt eine Innenseite 35 von einer Außenseite 37 des Rotorblatts 108.

Die optischen Drucksensoren 18 sind in nicht dargestellte eingefräste Kanäle eingelassen und dort eingeklebt, so dass diese nicht über die Blattwand hinausragen. Dazu ist auf die Oberfläche des Rotorblattes 108 bei der Herstellung des Rotorblattes 108 eine nicht dargestellte Opferschicht aufgebracht worden, die durch Fräsen im Bereich der optischen Drucksensoren 18 entfernt ist. Die genannte Art der Anbringung der Drucksensoren ist nur eine von mehreren Möglichkeiten. Für die vorliegende Erfindung ist die Art der Anbringung der Drucksensoren ohne Bedeutung.

Die optischen Drucksensoren sind häufig ein Zukaufteil und werden in einbaufertigem Zustand und kalibriert geliefert. Durch unterschiedliche Umwelteinflüsse, wie zum Beispiel Temperatur, Feuchtigkeit, Klebstoffe, mit denen der Sensor in Kontakt kommt, sowie eine Einbausituation des Sensors, führen zu der eingangs erwähnten absoluten und relativen Drift des Sensors.

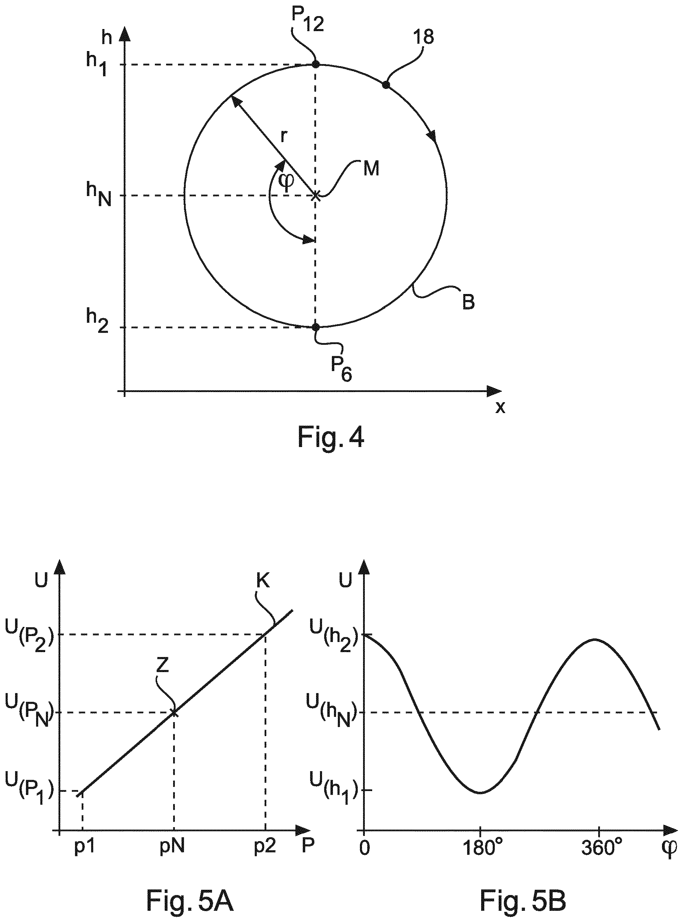

Fig. 4 zeigt beispielhaft eine kreisförmige Umlaufbahn B eines beispielhaft herausgegriffenen Sensors 18 um den Mittelpunkt M einer Drehachse des Rotors 112 der Windenergieanlage. Die Umlaufbahn B hat einen Radius r. Je weiter der Sensor 18 von dem Blattadapter 16 des Rotorblattes 108 entfernt angeordnet ist, desto größer ist der Radius r der Umlaufbahn B und umgekehrt. Für die nachfolgenden Überlegungen spielt es jedoch keine grundsätzliche Rolle an welcher Stelle der Drucksensor 18 auf den Rotorblatt angeordnet ist, vielmehr kommt es nur darauf an, dass der Drucksensor 18 um den Mittelpunkt M der Rotorachse umläuft. Der Drehwinkel des Rotorblattes, auf dem der Sensor 18 angeordnet ist, ist mit φ bezeichnet. Der Drehwinkel φ beschreibt gleichzeitig die Drehstellung des Sensors 18. Die Umlaufbahn B ist in einem Achsenkreuz dargestellt, auf dessen Ordinate die Höhe h über der Ebene aufgetragen ist, auf der der Turm 102 der Windenergieanlage steht. Auf der Abszisse ist eine horizontale Koordinate x aufgetragen, die sich in der Rotorebene senkrecht zu der Höhe h erstreckt. In Fig. 1 ist das Achsenkreuz ebenfalls dargestellt, um dessen Lage in Bezug auf die Windenergieanlage 100 zu veranschaulichen.

Während seines Umlaufes erreicht der Sensor 18 einen höchsten Punkt P12 mit einer Höhe h1, wenn das Rotorblatt 108, auf dem der Sensor montiert ist, eine 12-Uhr-Stellung einnimmt, und einen tiefsten Punkt P6 mit einer Höhe h2, wenn das Rotorblatt eine 6-Uhr-Stellung einnimmt. Dementsprechend befindet sich der Sensor 18 in einem Punkt P9 bzw. P3 auf einer Nabenhöhe hN, wenn das Rotorblatt eine 9-Uhr- bzw. 3-Uhr-Stellung einnimmt. Der Wert des Parameters x wird zunächst nicht weiter beachtet, weil er bei statischen Druckverhältnissen die Messwerte des Drucksensors nicht beeinflusst, wie im Folgenden noch näher erläutert werden wird.

Der statische Luftdruck hängt von der Höhe ab. Die Abhängigkeit wird von der barometrischen Höhenformel beschrieben:

$$p(h1) = p(h0) \times \exp(-\,Mg/RT \times (h1-h0)),$$

wobei p den Druck, h die Höhe, M die molare Masse von Luft, g die Erdbeschleunigung, R die Gaskonstante und T die absolute Temperatur bezeichnet. Anschaulich gesprochen beschreibt die barometrische Höhenformel, dass der Druck mit zunehmender Höhe exponentiell abnimmt. Daraus folgt, dass der Drucksensor 18 auf seiner Umlaufbahn B unterschiedlichen statischen Drücken ausgesetzt ist, wobei an dem höchsten Punkt P12 der niedrigste Druck und an dem niedrigsten Punkt P6 der höchste Druck herrscht.

In der Praxis kann man davon ausgehen, dass die Kennlinie der verwendeten Drucksensoren in dem relevanten Druckbereich so verläuft wie es in Figur 5A veranschaulicht ist. Figur 5A zeigt die Kennlinie K eines Drucksensors dessen Messwert U mit zunehmendem Druck p linear ansteigt, wobei der Messwert sowohl ein analoger als auf ein digitaler Messwert sein kann.

Unter der Annahme, dass auf der in Figur 4 gezeigten Höhe h1 ein Druck p1, auf der Höhe h2 ein Druck p2 und auf Nabenhöhe hN ein Druck pN herrscht, führt die in Figur 5A gezeigte Kennlinie zu dem in Figur 5B dargestellten Kosinusverlauf des Messwertes des Drucksensors als Funktion des Umlaufwinkels φ, wenn in der 6-Uhr-Stellung des Sensors 18 der Drehwinkel des Sensors 18 φ = 0 ist, wobei in Figur 5B die Messwerte als Funktion der Höhe h dargestellt sind, die bei bestimmten Drehwinkeln φ erreicht werden.

Aus der Zusammenschau der Figuren 4 und 5A ist ablesbar, dass der mit dem Drucksensor 18 gemessene Druck auf Nabenhöhe pN stets der Mittelwert zwischen den Drücken p1 und p2 ist. Alternativ zu der Mittelwertbildung ist der Druck auf Nabenhöhe pN mit dem Sensor 18 auch dann messbar, wenn sich das Rotorblatt, auf dem der Sensor 18 angeordnet ist, in der 9-Uhr- bzw. 3-Uhr-Stellung befindet.

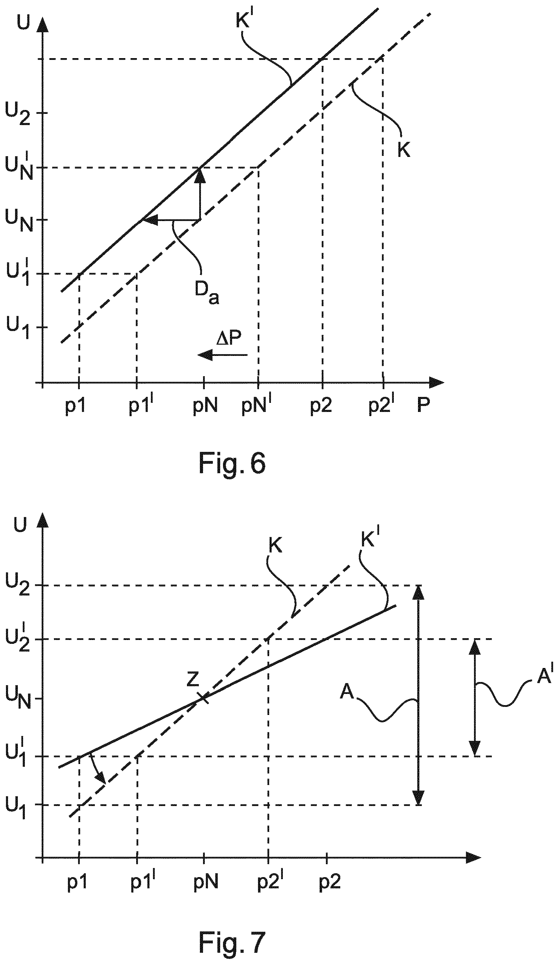

In Fig. 6 ist am Beispiel der Kennlinie K aus Fig. 5A der Einfluss einer absoluten Drift der Messwerte des Drucksensors illustriert. Die Kennlinie zeigt einen linearen Verlauf des Messwertes U als Funktion des Druckes p. Die absolute Drift verschiebt die gestrichelt dargestellte ursprüngliche Kernlinie K in dem Diagramm nach links, was durch einen Pfeil Da dargestellt ist. Durch die Verschiebung ergibt sich eine neue Kennlinie K', die mit einer durchgezogenen Linie dargestellt ist. Ohne Einschränkung der Allgemeinheit wird davon ausgegangen, dass die tatsächlich herrschenden Drücke p1, p2 und pN unverändert sind. Durch die Verschiebung der Kennlinie sind alle Messwerte Ui' des Drucksen-sors um einen Wert ΔU zu höheren Werten hin verschoben. Die Steuerung der Windenergieanlage "weiß" von der Verschiebung der Kennlinie nichts, sodass die verschobenen Messwerte Ui' von der Steuerelektronik gemäß der ursprünglichen Kennlinie K interpretiert werden und somit systematisch zu hohe Druckwerte für die Steuerung und/oder Regelung der Windenergieanlage verwendet werden. Konkret wird bei dem tatsächlich herrschenden Druck p1 gemäß der Kennlinie K' der Sensor einen Messwert U1' ab, der gemäß der Kennlinie K als Druckwert p1' interpretiert wird. Der Druck p1' ist um den Wert Δp größer als der tatsächlich herrschenden Druck p1. Dasselbe gilt für alle anderen Messwerte entsprechend. Nach wie vor gilt jedoch, dass der Mittelwert zwischen dem höchsten und dem niedrigsten Druckwert p2' bzw. p1' dem Druck auf Nabenhöhe pN gleichgesetzt wird.

Bei einem Ausführungsbeispiel der vorliegenden Erfindung ist deshalb der weitere Drucksensor 33 an oder in der Gondel vorgesehen, um den Druck auf Nabenhöhe unabhängig von Drucksensoren in den Rotorblättern zu ermitteln und einen Referenzdruckwert pref abzugeben. Der Drucksensor 33 an der Gondel ist ein kalibrierter alterungsbeständiger Sensor, der unempfindlich gegenüber Temperaturänderungen und anderen Umwelteinflüssen ist. Der von dem Drucksensor 33 gemessene Druck wird dazu benutzt, um eine durch eine absolute Drift verschobene Kennlinie K' zu korrigieren, indem ein Korrekturwert Δp bestimmt wird, der den aus der Kennlinie K' ermittelten Nabendruck pN' so korrigiert, dass er mit dem von dem Drucksensor 33 an der Gondel festgestellten Nabendruck pN bzw. pref übereinstimmt:

$$pN = pN' - \Delta p.$$

Dieser Korrekturwert wird auf alle Messwerte des Drucksensors in dem Rotorblatt angewendet, wodurch die durch Umwelteinflüsse oder Alterung verursachte Verschiebung der der Kennlinie des Drucksensors 18 kompensiert wird.

Alternativ zu dem Drucksensor 33 ist bei einem Ausführungsbeispiel eine Empfangseinrichtung 33' vorgesehen, die allgemeine Wetterdaten empfängt, insbesondere meteorologische Luftdruckdaten. Aus den meteorologischen Luftdruckdaten ist mit Hilfe der barometrischen Höhenformel der Referenzdruck pref auf Nabenhöhe bestimmbar.

In Fig. 6 ist eine Verschiebung der Kennlinie des optischen Drucksensors in dem Diagramm nach links gezeigt, was beim Auslesen des optischen Drucksensors systematisch zu Druckwerten führt, die höher als der wirklich herrschende Luftdruck sind. Es wird jedoch festgehalten, dass dasselbe Prinzip zur Korrektur einer absoluten Drift der Kennlinie des Drucksensors genauso funktioniert, wenn die Kennlinie K' durch die absolute Drift in dem in Figur 6 gezeigten Diagramm im Vergleich zu der ursprünglichen Kennlinie K nach rechts verschoben wird. Eine Verschiebung der Kennlinie K' nach rechts hat entsprechend gemäß der oben vorgestellten Überlegungen zur Folge, dass der Drucksensor 18 bei gegebenem Druck p systematisch einen kleineren Messwert abgibt als er gemäß einer unverschobenen Kennlinie abgeben würde. Dementsprechend werden somit systematisch zu niedrige Druckwerte für die Steuerung und/oder Regelung der Windenergieanlage verwendet, wenn keine Kompensation der Drift der Kennlinie erfolgt. Das Vorgehen zur Kompensation ist ganz entsprechend wie bei einer nach links verschobenen Kennlinie mit dem einzigen Unterschied, dass der Korrekturwert Δp das Vorzeichen wechselt.

In Fig. 7 ist eine relative Drift der Kennlinie K aus Figur 5A dargestellt. Unter einer relativen Drift ist eine Änderung der Empfindlichkeit des optischen Drucksensors 18 zu verstehen und zwar sowohl im Sinne einer Erhöhung als auch einer Verminderung der Empfindlichkeit. Die Änderung der Empfindlichkeit zeigt sich in dem Diagramm in Fig. 7 durch eine Änderung der Steigung der Kennlinie K' gegenüber der ursprünglichen Kennlinie K. Die ursprüngliche Kennlinie K des optischen Drucksensors ist als gestrichelte Linie gezeigt. Die durch eine relative Drift veränderte Kennlinie K' ist als durchgezogene Linie dargestellt. In dem veranschaulichten Beispiel verursacht die relative Drift eine Abnahme der Empfindlichkeit des optischen Drucksensors, d.h. in dem Diagramm in Fig. 7 ist die Steigung der Kennlinie K' kleiner als die Steigung der Kennlinie K. Wiederum ist davon auszugehen, dass die Steuerung der Windenergieanlage von der relativen Drift nichts "weiß", d.h. die die Messwerte des Drucksensors folgen der Kennlinie K', werden aber dennoch gemäß der Kennlinie K interpretiert. Das hat zur Folge, dass bei niedrigen Drucken am unteren Ende der Kennlinie K' bei dem tatsächlich herrschenden Druck p1 ein Messwert U1' festgestellt wird, der gemäß der Kennlinie K mit einem höheren Druck p1' in Verbindung gebracht wird. Bei hohen Drucken am oberen Ende der Kennlinie K' wird bei dem tatsächlich herrschenden Druck p2 ein Messwert U2' festgestellt, der gemäß der Kennlinie K mit einem niedrigeren Druck p2' in Verbindung gebracht wird.

Anders gesagt: Wenn der Drucksensor 18 bei der Drehung des Rotors auf der Umlaufbahn B umläuft und dabei einem höchsten Druck p2 und einem niedrigsten Druck p1 ausgesetzt ist, beträgt der Unterschied A der Druckmesswerte bei einem Drucksensor, welcher der ursprünglichen Kennlinie folgt A = U2(p2) - U1(p1), was in Fig. 7 auch zeichnerisch dargestellt ist. Wenn der Drucksensor jedoch einer relativen Drift unterliegt und nunmehr der Kennlinie K' folgt, dann schrumpft der Unterschied der Messwerte auf den Wert A' = U2'(p2) - U1'(p1), bei - wohlgemerkt - unveränderten Druckverhältnissen. Außerdem wird festgehalten, dass der Messwert $U_N$ für den Druck auf Nabenhöhe von einer relativen Drift nicht beeinflusst ist.

In einer Darstellung wie in Fig. 5B korrespondieren die Unterschiede A bzw. A' der Amplitude einer Kosinuskurve, wenn die Druckmesswerte als Funktion des Drehwinkels aufgetragen sind.

Zur Korrektur einer relativen Drift ist es bei einem Ausführungsbeispiel der Erfindung unter der Annahme einer linearen Kennlinie vorgesehen, zunächst die Steigung der Kennlinie zu ermitteln. Hierfür wird mithilfe der barometrischen Höhenformel eine Druckdifferenz berechnet und der größte und der kleinste Messwert des optischen Drucksen-sors festgestellt. Aus diesen Werten wird die Steigung der Kennlinie berechnet und mit einem Faktor korrigiert bis der Unterschied zwischen dem gemessenen größten und kleinsten Messwert so groß ist wie der Unterschied gemäß der ursprünglichen Kennlinie K sein müsste.

Aus der barometrischen Höhenformel ist eine Abhängigkeit des Druckes auch von der herrschenden Temperatur erkennbar. Bei modernen Windenergieanlagen mit Naben-höhen von 150 Metern und mehr sowie Rotordurchmessern von beispielsweise 100 m bis 150 m treten in der Praxis Temperaturunterschiede in den Luftschichten auf, durch die sich der Rotorblätter bewegen. Beispielsweise kann die Temperatur der Luftschicht, in die er sich einen Drucksensor befinden, wenn das Rotorblatt in 12-Uhr-Stellung eingenommen hat um mehrere Grad Celsius von der Temperatur abweichen, die eine Luftschicht hat, in der sich der Drucksensor befindet, wenn das Rotorblatt in einer 6-Uhr-Stellung ist. Bei einem in Fig. 1 gezeigten vorteilhaften Ausführungsbeispiel sind deshalb auch Temperatursensoren 113, 114 vorgesehen, welche die Lufttemperatur in unterschiedlichen Höhen messen, um den Einfluss unterschiedlicher Temperaturen in der barometrischen Höhenformel zu berücksichtigen. Bei einer konkreten Ausführungsform sind die Temperatursensoren 113 auf unterschiedlichen Höhen des Turmes der Windenergieanlage angeordnet. Alternativ dazu oder zusätzlich sind auf den Rotorblättern ebenfalls Temperatursensoren 114 vorgesehen, welche die Temperatur bei der Rotation des Rotors in unterschiedlichen Höhen erfassen.

Aus der barometrischen Höhenformel ist auch eine Abhängigkeit des Druckes von der molaren Masse M von Luft ablesbar. Die mittlere molare Masse von Luft ergibt sich als Summe der Produkte der molaren Massen und Stoffmengenanteile der hauptsächlichen Bestandteile, nämlich Sauerstoff, Stickstoff und Argon. Da Wasserdampf leichter als trockene Luft ist hängt der sich an einem Ort einstellende statische Luftdruck ebenfalls von der Luftfeuchtigkeit ab. Das ist beispielsweise dann relevant, wenn die Luftschicht, in der sich der Drucksensor 18 in der 12-Uhr-Stellung des Rotorblattes befindet, einer andere Luftfeuchtigkeit aufweist als die Luftschicht, in der sich der Drucksensor 18 in der 6-Uhr-Stellung des Rotorblattes befindet. Die Luftfeuchtigkeitssensoren 116, 117 ermöglichen es, den Einfluss der Luftfeuchtigkeit bei der Kalibrierung des Drucksensors 18 zu berücksichtigen.

Gemäß einer vorteilhaften Ausführungsform der Erfindung erfolgt eine Kalibrierung der Drucksensoren vorzugsweise im Trudelbetrieb der Windenergieanlage, während dessen ein auf die Drucksensoren einwirkender möglicher Staudruck oder Unterdruck aufgrund der Umströmung des Blattes sehr gering ist. Es kann von daher nur zu einer geringen Verfälschung des Ergebnisses in Bezug auf den statischen Druck kommen. In dem Trudelbetrieb haben die Rotorblätter der Windenergieanlage beispielsweise einen Pitch- bzw. Einstellwinkel von 70°. Eine Windenergieanlage geht aus unterschiedlichen Gründen regelmäßig in den Trudelbetrieb über, zum Beispiel bei Windmangel, zum Abgleich der Lastensteuerung oder auch wenn ein Überangebot an elektrischer Energie in dem Versorgungsnetz, an das die Windenergieanlage angeschlossen ist, eine Abschaltung der Windenergieanlage erzwingt. Dadurch ist es möglich, die in den Rotorblättern angeordneten Drucksensoren regelmäßig zu kalibrieren und die eingangs beschriebenen Probleme, die durch eine absolute und/oder relative Drift der Kennlinie der Drucksensoren hervorgerufen werden, zu vermeiden, ohne dass dadurch zusätzliche Einschränkungen bei der Energieproduktion hingenommen werden müssen.

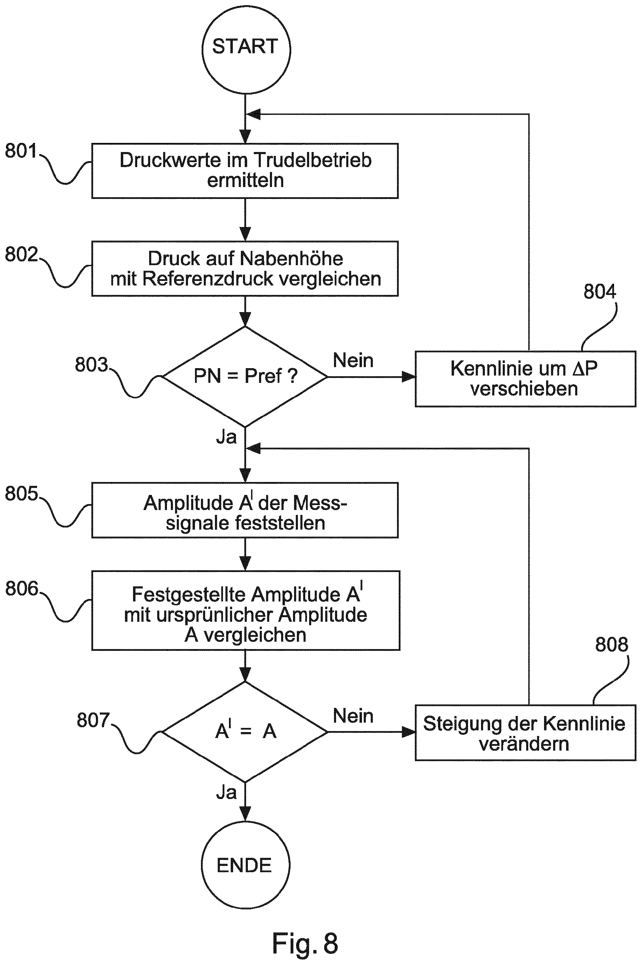

Fig. 8 zeigt ein Flussdiagramm mit den einzelnen Verfahrensschritten zur Kalibrierung eines optischen Drucksensors, der an dem Rotorblatt einer Windenergieanlage angeordnet ist. In einem Schritt 801 werden im Trudelbetrieb Messwerte der einzelnen Drucksen-soren ermittelt, insbesondere in der 12-Uhr- und 6-Uhr-Stellung des Rotorblattes auf der jeweilige Drucksensor angeordnet ist. Die Messwerte werden von allen Drucksensoren zum Beispiel mit einer Rate von 5000 Hz ausgelesen. Die hohe Anzahl der Messwerte wird durch Filterung bzw. Mittelung reduziert, wobei einzelne Ausreißer in den Messwerten bereits vor der Filterung bzw. Mittelung entfernt werden. Mithilfe eines Drehsen-sors, der die Drehstellung des Rotors feststellt, ist es möglich, jeden Messwert mit einer bestimmten Höhe zu verknüpfen, auf der sich der Drucksensor zum Zeitpunkt der Messung befindet. Auf diese Weise wird die in Fig. 5B dargestellte Messkurve erfasst, aus der sich mithilfe der barometrischen Höhenformel ein Druck auf Nabenhöhe pN ableiten lässt. Mit dem an der Gondel 104 angeordneten Drucksensor 33 wird ein Referenzdruck pref festgestellt und in Schritt 802 mit dem Druck auf Nabenhöhe verglichen. In der Verzweigung 803 wird geprüft, ob der Druck auf Nabenhöhe pN innerhalb eines vorgegebenen Toleranzbereiches von zum Beispiel ± 1 hPa mit dem Referenzdruck pref übereinstimmt. Hierbei kommt es tatsächlich nicht auf die absolute Höhe des Referenzdruckes pref an, sondern lediglich auf die Abweichung des ermittelten Drucks auf Nabenhöhe pN von dem Referenzdruck pref. Der Toleranzbereich bildet einen ersten Toleranzbereich. Wenn die erforderliche Übereinstimmung nicht gegeben ist, wird in Schritt 804 die gesamte Kennlinie des Drucksensors um den Differenzwert Δp so verschoben, dass der Druck auf Nabenhöhe pN mit dem Referenzdruck pref innerhalb des Toleranzbereiches übereinstimmt. Der Toleranzbereich von ± 1 hPa ist nur beispielhaft zu verstehen. In anderen Ausführungsbeispielen kann der Toleranzbereich sowohl kleiner als auch größer gewählt sein.

Wird in der Verzweigung 803 eine Übereinstimmung des Druckes auf Nabenhöhe pN mit dem Referenzdruck festgestellt, wird in Schritt 805 der Unterschied A' der Messwerte des Drucksensors festgestellt und in Schritt 806 mit dem ursprünglichen Unterschied A des kalibrierten Drucksensors verglichen. Unter dem Unterschied A bzw. A' der Messwerte ist die Differenz zwischen dem größten und kleinsten Messwert des Drucksensors bei einem Umlauf des Rotors zu verstehen. Der höchste Druck ergibt sich dabei regelmäßig in der 6-Uhr-Stellung des Rotorblattes auf dem der Drucksensor angebracht ist und der niedrigste Druck dementsprechend in der 12-Uhr-Stellung des Rotorblattes. Wenn in der Verzweigung 807 zwischen dem so festgestellten Unterschied A' und dem normalerweise mit einem kalibrierten Drucksensor erreichbaren Unterschied A eine Abweichung auftritt, die größer ist als ein zweiter Toleranzbereich von zum Beispiel ± 5% des Wertes des Unterschieds A, dann wird in Schritt 808 die Steigung der Kennlinie des Drucksensors so korrigiert, dass der festgestellte Unterschied A' wieder mit dem Unterschied A eines kalibrierten Drucksensors zumindest innerhalb des zweiten Toleranzbereiches wieder übereinstimmt. Selbstverständlich kann der Toleranzbereich sowohl größer als auch kleiner als ± 5% gewählt werden. Grundsätzlich ist es deshalb auch möglich, dass die Steigung der Kennlinie bei dem Auftreten jeder noch so geringen Abweichung korrigiert wird.

Das Verfahren wird innerhalb einer Messeinrichtung in der Windenergieanlage ausgeführt, die sowohl Hardware als auch Software umfasst.

Es ist zwar vorteilhaft, das erfindungsgemäße Verfahren im Trubelbetrieb der Windenergieanlage auszuführen, aber nicht zwingend erforderlich, wenn der außerhalb des Trudelbetriebs der Windenergieanlage an den Rotorblättern auftretende Staudruck vernachlässigbar ist oder von der Messeinrichtung in geeigneter Weise kompensiert wird. Insbesondere bei Sensoren im Bereich der Hinterkante kann, da auch hier im Normalbetrieb der dynamische Anteil des Druckes relative gering ist, eine Kalibrierung der Steigung bzw. relativen Sensitivität auch im Leistungsbetrieb der Anlage vorgenommen werden.

Obwohl in der Beschreibung der Ausführungsbeispiele auf optische Drucksensoren und insbesondere faseroptische Drucksensoren Bezug genommen wurde, ist die vorliegende Erfindung auch auf andere Arten von Drucksensoren anwendbar.

## Patentansprüche

1. Verfahren zur Kalibrierung eines Drucksensors (18), der an einem Rotorblatt (108) einer Windenergieanlage (100) angeordnet ist, das an einem Rotor (106) der Windenergieanlage befestigt ist, und wobei das Verfahren zur Kalibrierung folgende Verfahrensschritte umfasst

　　- Ermitteln (801) von Messwerten des Drucksensors in wenigstens zwei Drehstellungen des Rotors, in denen sich der Drucksensor in unterschiedlichen Höhen befindet;
　　- Vergleichen (802) eines auf Nabenhöhe ermittelten Druckes (pN) mit einem Referenzdruck (pref);
　　- im Falle einer Abweichung des ermittelten Drucks auf Nabenhöhe (pN) von dem Referenzdruck (pref), die größer als ein erster vorgegebener Toleranzbereich ist, Verschieben (804) einer Kennlinie (K) des Drucksensors, bis der ermittelte Druck auf Nabenhöhe innerhalb des vorgegebenen Toleranzbereiches mit dem Referenzdruck (pref) übereinstimmt;
　　- Feststellen (805) des Unterschieds (A') der Messwerte des Drucksensors (18) in den wenigstens zwei Drehstellungen des Rotors;
　　- im Falle einer Abweichung des Unterschieds (A') der festgestellten Messwerte des Drucksensors von einem ursprünglichen Unterschied (A), die größer als ein zweiter vorgegebener Toleranzbereich ist, Korrigieren (808) der Kennlinie derart, dass der festgestellte Unterschied (A') innerhalb des vorgegebenen Toleranzbereiches wieder mit dem ursprünglichen Unterschied (A) übereinstimmt.

2. Verfahren nach Anspruch 1, wobei der auf Nabenhöhe ermittelte Druck (pN) aus den Messwerten des Drucksensors (18) bestimmt wird, insbesondere aus einem Mittelwert der Messwerte (p1, p2) in den beiden Drehstellungen, oder der auf Nabenhöhe ermittelte Druck (pN) entspricht den Messwerten des Drucksensors (18), wenn sich das Rotorblatt, auf dem der Sensor (18) angeordnet ist, in der 9-Uhr- bzw. 3-Uhr-Stellung befindet.

3. Verfahren nach Anspruch 1 oder 2, **dadurch gekennzeichnet, dass** das Korrigieren (808) der Kennlinie es umfasst, eine Steigung einer linearen Kennlinie (K') zu verändern.

4. Verfahren nach einem der vorstehenden Ansprüche, **dadurch gekennzeichnet, dass** die Messwerte des Drucksensors (18) während eines Trudelbetriebs der Windenergieanlage ermittelt werden.

5. Verfahren nach einem der vorstehenden Ansprüche, **dadurch gekennzeichnet, dass** die Messwerte des Drucksensors (18) ermittelt werden, wenn das Rotorblatt (108) mit dem Drucksensor eine 12-Uhr-Stellung bzw. eine 6-Uhr-Stellung einnimmt.

6. Verfahren nach einem der vorstehenden Ansprüche, **dadurch gekennzeichnet, dass** die Messwerte des Drucksensors in mehr als zwei Drehstellungen des Rotors ermittelt werden.

7. Verfahren nach Anspruch 6, **dadurch gekennzeichnet, dass** die Messwerte des Drucksensors mit einer Messrate von wenigstens 10 Hz ermittelt werden.

8. Verfahren nach einem der vorstehenden Ansprüche, **dadurch gekennzeichnet, dass** von mehreren Drucksensoren, die auf jeweils einem Rotorblatt in demselben Abstand (r) von einer Drehachse des Rotors (106) angeordnet sind, Messwerte ermittelt werden, wenn der jeweilige Drucksensor eine vorbestimmte Stelle (P12, P6) auf einer Umlaufbahn (B) um die Drehachse des Rotors (106) erreicht, und dass die Messwerte aller Sensoren gemittelt werden, um einen Ausgangsmesswert zu erzeugen.

9. Verfahren nach einem der vorstehenden Ansprüche, **dadurch gekennzeichnet, dass** zusätzlich die Lufttemperatur und/oder Luftfeuchtigkeit in unterschiedlichen Höhen festgestellt wird.

10. Windenergieanlage mit einem Rotor, an dem wenigstens ein Rotorblatt befestigt ist, welches einen Drucksensor (18) trägt und mit einem Drehsensor (29), der die Drehstellung des Rotors (106) ermittelt, sowie mit einer Messeinrichtung (28), welche dazu eingerichtet ist, die Messwerte des Drucksensors (18) und des Drehsensors (29) auszulesen und eine Kennlinie (K') des Drucksensors (18), nach einem Verfahren gemäß einem der vorstehenden Ansprüche zu kalibrieren.

11. Windenergieanlage nach Anspruch 10, **dadurch gekennzeichnet, dass** der Drucksensor (18) im Messbereich von atmosphärischen Drücken eine lineare Kennlinie (K) hat.

12. Windenergieanlage nach Anspruch 10 oder 11, **dadurch gekennzeichnet, dass** die Messeinrichtung einen weiteren Drucksensor (33) aufweist, der auf Nabenhöhe insbesondere an einer Gondel (104) der Windenergieanlage angeordnet ist.

13. Windenergieanlage nach einem der Ansprüche 10 bis 12, **dadurch gekennzeichnet, dass** die Messeinrichtung eine Empfangseinrichtung (34) aufweist, die allgemeine Wetterdaten empfängt, insbesondere meteorologische Luftdruckdaten.

14. Windenergieanlage nach einem der Ansprüche 10 bis 13, **dadurch gekennzeichnet, dass** ein Turm (102) der Windenergieanlage mit in unterschiedlichen Höhen angeordneten Temperatursensoren (113) und/oder Feuchtigkeitssensoren (116) ausgerüstet ist.

15. Windenergieanlage nach einem der Ansprüche 10 bis 14, **dadurch gekennzeichnet, dass** auf dem wenigstens einen Rotorblatt (108) der Windenergieanlage ein Temperatursensor (114) und/oder ein Feuchtigkeitssensor (117) angeordnet ist bzw. sind.

16. Windenergieanlage nach einem der Ansprüche 10 bis 15, **dadurch gekennzeichnet, dass** die Messeinrichtung (28) dazu eingerichtet ist, das Verfahren zur Kalibrierung während eines betriebsbedingten Trudelns durchzuführen.

## Claims

1. A method for calibrating a pressure sensor (18) arranged on a rotor blade (108) of a wind turbine plant (100), which rotor blade is secured to a rotor (106) of the wind turbine plant, and wherein the calibration method comprises the following process steps

   - ascertaining (801) measured values of the pressure sensor in at least two rotation positions of the rotor, in which the pressure sensor is in different heights;
   - comparing (802) a pressure (pN) ascertained at hub height with a reference pressure (pref);
   - if a disparity in the ascertained pressure at hub height (pN) from the reference pressure (pref) is greater than a first prescribed tolerance range, shifting (804) a characteristic curve (K) of the pressure sensor until the ascertained pressure at hub height is concordant with the reference pressure (pref) within the prescribed tolerance range;
   - determining (805) the difference (A') in the measured values of the pressure sensor (18) in the at least two rotation positions of the rotor;
   - if a disparity in the difference (A') in the determined measured values of the pressure sensor from an original difference (A) is greater than a second prescribed tolerance range, correcting (808) the characteristic curve such that the determined difference (A') is again concordant with the original difference (A) within the prescribed tolerance range.

2. The method as claimed in claim 1, wherein the pressure (pN) ascertained at hub height is determined from the measured values of the pressure sensor (18), in particular from a mean value of the measured values (p1, p2) in the two rotation positions, or the pressure (pN) ascertained at hub height corresponds to the measured values of the pressure sensor (18) when the rotor blade on which the sensor (18) is arranged is in the 9 o'clock or 3 o'clock position.

3. The method as claimed in claim 1 or 2, **characterized in that** correcting (808) the characteristic curve comprises altering a gradient of a linear characteristic curve (K').

4. The method as claimed in one of the preceding claims, **characterized in that** the measured values of the pressure sensor (18) are ascertained during a coasting mode of the wind turbine plant.

5. The method as claimed in one of the preceding claims, **characterized in that** the measured values of the pressure sensor (18) are ascertained when the rotor blade (108) with the pressure sensor adopts a 12 o'clock position or a 6 o'clock position.

6. The method as claimed in one of the preceding claims, **characterized in that** the measured values of the pressure sensor are ascertained in more than two rotation positions of the rotor.

7. The method as claimed in claim 6, **characterized in that** the measured values of the pressure sensor are ascertained at a measurement rate of at least 10 Hz.

8. The method as claimed in one of the preceding claims, **characterized in that** measured values are ascertained from multiple pressure sensors, which are each arranged on a rotor blade at the same interval (r) from an axis of rotation of the rotor (106), when the respective pressure sensor reaches a predetermined point (P12, P6) on an orbit (B) around the axis of rotation of the rotor (106), and **in that** the measured values of all sensors are averaged to produce an output measured value.

9. The method as claimed in one of the preceding claims, **characterized in that** the air temperature and/or humidity at different heights is additionally determined.

10. A wind turbine plant having a rotor to which at least one rotor blade that carries a pressure sensor (18) is secured and having a rotation sensor (29) that ascertains the rotation position of the rotor (106), and also having a measuring device (28) configured to read the measured values of the pressure sensor (18) and of the rotation sensor (29) and to calibrate a characteristic curve (K') of the pressure sensor (18), using a method as claimed in one of the preceding claims.

11. The wind turbine plant as claimed in claim 10, **characterized in that** the pressure sensor (18) has a linear characteristic curve (K) in the measurement range of atmospheric pressures.

12. The wind turbine plant as claimed in claim 10 or 11, **characterized in that** the measuring device has a further pressure sensor (33) arranged at hub height, in particular on a nacelle (104) of the wind turbine plant.

13. The wind turbine plant as claimed in one of claims 10 to 12, **characterized in that** the measuring device has a receiving device (34) that receives general weather data, in particular meteorological air pressure data.

14. The wind turbine plant as claimed in one of claims 10 to 13, **characterized in that** a tower (102) of the wind turbine plant is equipped with temperature sensors (113) and/or moisture sensors (116) arranged at different heights.

15. The wind turbine plant as claimed in one of claims 10 to 14, **characterized in that** a temperature sensor (114) and/or a moisture sensor (117) is/are arranged on the at least one rotor blade (108) of the wind turbine plant.

16. The wind turbine plant as claimed in one of claims 10 to 15, **characterized in that** the measuring device (28) is configured to perform the calibration method during operation-dependent coasting.

## Revendications

1. Procédé d'étalonnage d'un capteur de pression (18), qui est disposé sur une pale de rotor (108) d'une éolienne (100), qui est fixée sur un rotor (106) de l'éolienne, et dans lequel le procédé d'étalonnage comprend des étapes de procédé suivantes

    - de détermination (801) de valeurs de mesure du capteur de pression dans au moins deux positions de rotation du rotor, dans lesquelles le capteur de pression se trouve à différentes hauteurs ;

- de comparaison (802) d'une pression déterminée à hauteur de moyeu (pN) à une pression de référence (pref) ;

- dans le cas d'un écart de la pression déterminée à hauteur de moyeu (pN) de la pression de référence (pref), qui est supérieur à une première plage de tolérances spécifiée, de décalage (804) d'une courbe caractéristique (K) du capteur de pression jusqu'à ce que la pression déterminée à hauteur de moyeu coïncide avec la pression de référence (pref) dans la plage de tolérances spécifiée ;

- de relevé (805) de la différence (A') des valeurs de mesure du capteur de pression (18) dans les au moins deux positions de rotation du rotor ;

- dans le cas d'un écart de la différence (A') des valeurs de mesure relevées du capteur de pression d'une différence initiale (A), qui est supérieur à une deuxième plage de tolérances spécifiée, de correction (808) de la courbe caractéristique de telle manière que la différence relevée (A') coïncide à nouveau avec la différence initiale (A) dans la plage de tolérances spécifiée.

2. Procédé selon la revendication 1, dans lequel la pression déterminée à hauteur de moyeu (pN) est définie à partir des valeurs de mesure du capteur de pression (18), en particulier à partir d'une valeur moyenne des valeurs de mesure (p1, p2) dans les deux positions de rotation ou la pression déterminée à hauteur de moyeu (pN) correspond aux valeurs de mesure du capteur de pression (18) quand la pale de rotor, sur laquelle est disposé le capteur (18), se trouve dans la position à 09h00 ou à 03h00.

3. Procédé selon la revendication 1 ou 2, **caractérisé en ce que** la correction (808) de la courbe caractéristique comprend la modification d'une pente d'une courbe caractéristique linéaire (K').

4. Procédé selon l'une quelconque des revendications précédentes, **caractérisé en ce que** les valeurs de mesure du capteur de pression (18) sont déterminées pendant un mode de fonctionnement vrille de l'éolienne.

5. Procédé selon l'une quelconque des revendications précédentes, **caractérisé en ce que** les valeurs de mesure du capteur de pression (18) sont déterminées quand la pale de rotor (108) adopte avec le capteur de pression une position à 12h00 ou une position à 06h00.

6. Procédé selon l'une quelconque des revendications précédentes, **caractérisé en ce que** les valeurs de mesure du capteur de pression sont déterminées dans plus de deux positions de rotation du rotor.

7. Procédé selon la revendication 6, **caractérisé en ce que** les valeurs de mesure du capteur de pression sont déterminées avec un taux de mesure d'au moins 10 Hz.

8. Procédé selon l'une quelconque des revendications précédentes, **caractérisé en ce que** des valeurs de mesure sont déterminées par plusieurs capteurs de pression, qui sont disposés sur respectivement une pale de rotor à la même distance (r) d'un axe de rotation du rotor (106) quand le capteur de pression respectif atteint un emplacement prédéfini (P12, P6) sur une trajectoire périphérique (B) autour de l'axe de rotation du rotor (106), et que les valeurs de mesure de tous les capteurs sont mises en une valeur moyenne pour produire une valeur de mesure de départ.

9. Procédé selon l'une quelconque des revendications précédentes, **caractérisé en ce qu'**en supplément la température de l'air et/ou l'humidité de l'air sont relevées à des hauteurs différentes.

10. Eolienne avec un rotor, sur lequel au moins une pale de rotor est fixée, laquelle supporte un capteur de pression (18), et avec un capteur de rotation (29), qui détermine la position de rotation du rotor (106), ainsi qu'avec un système de mesure (28), lequel est mis au point pour lire les valeurs de mesure du capteur de pression (18) et du capteur de rotation (29) et pour étalonner une courbe caractéristique (K') du capteur de pression (18) selon un procédé selon l'une quelconque des revendications précédentes.

11. Eolienne selon la revendication 10, **caractérisée en ce que** le capteur de pression (18) a une courbe caractéristique linéaire (K) dans la plage de mesure de pressions atmosphériques.

12. Eolienne selon la revendication 10 ou 11, **caractérisée en ce que** le système de mesure présente un autre capteur de pression (33), qui est disposé à hauteur de moyeu en particulier sur une nacelle (104) de l'éolienne.

13. Eolienne selon l'une quelconque des revendications 10 à 12, **caractérisée en ce que** le système de mesure présente un système de réception (34), qui reçoit des données météorologiques générales, en particulier des données météorologiques de pression de l'air.

14. Eolienne selon l'une quelconque des revendications 10 à 13, **caractérisée en ce qu'**une tour (102) de l'éolienne est équipée de capteurs de température (113) et/ou de capteurs d'humidité (116) disposés à des hauteurs différentes.

**15.** Eolienne selon l'une quelconque des revendications 10 à 14, **caractérisée en ce qu'**un capteur de température (114) et/ou un capteur d'humidité (117) est disposé ou sont disposés sur l'au moins une pale de rotor (108) de l'éolienne.

**16.** Eolienne selon l'une quelconque des revendications 10 à 15, **caractérisée en ce que** le système de mesure (28) est mis au point pour mettre en œuvre le procédé d'étalonnage pendant une vrille liée au mode de fonctionnement.

Fig. 1

Fig. 2

Fig. 3

Fig. 4

Fig. 5A

Fig. 5B

Fig. 6

Fig. 7

START

801 — Druckwerte im Trudelbetrieb ermitteln

802 — Druck auf Nabenhöhe mit Referenzdruck vergleichen

803 — PN = Pref ?

Nein → 804 Kennlinie um ΔP verschieben

Ja

805 — Amplitude A$^I$ der Mess-signale feststellen

806 — Festgestellte Amplitude A$^I$ mit usprünlicher Amplitude A vergleichen

807 — A$^I$ = A

Nein → 808 Steigung der Kennlinie verändern

Ja

ENDE

Fig. 8

**IN DER BESCHREIBUNG AUFGEFÜHRTE DOKUMENTE**

**In der Beschreibung aufgeführte Patentdokumente**

- WO 2015185720 A1
- DE 102014117914 A1
- US 20140186176 A1
- EP 1733241 A1